# EUROPÄISCHE PATENTSCHRIFT

(11) **EP 3 641 105 B1**
(45) Veröffentlichungstag und Bekanntmachung des Hinweises auf die Patenterteilung: **20.09.2023**
(21) Anmeldenummer: 19201048.6
(22) Anmeldetag: 02.10.2019
(51) Int. Cl.: H02K 3/52, H02K 3/38, H02K 15/095

(54) **GLEICHSTROMMOTOR UND VERFAHREN ZU SEINER HERSTELLUNG**
DC MOTOR AND METHOD FOR THE PRODUCTION THEREOF
MOTEUR À COURANT CONTINU ET SON PROCÉDÉ DE FABRICATION

(30) Priorität: 18.10.2018 DE 102018217857
(43) Veröffentlichungstag der Anmeldung: 22.04.2020
(73) Patentinhaber: Bühler Motor GmbH, 90459 Nürnberg (DE)
(72) Erfinder: BRETTSCHNEIDER, Jürgen, 90482 Nürnberg (DE); Antes, Michael, 91358 Kunreuth (DE); Reinecker, Bernd, 90491 Nürnberg (DE)

(56) Entgegenhaltungen:
- EP-A2- 3 151 389
- EP-B1- 3 151 389
- DE-A1-102015 211 836
- US-A1- 2013 270 932
- US-A1- 2015 137 637
- US-A1- 2018 262 075

## Beschreibung

Die Erfindung betrifft ein Verfahren zur Herstellung eines Gleichstrommotors (1), mit einem permanentmagnetischen, um eine Motorlängsachse (19) drehbar gelagerten Innenrotor (2) und einem Stator (30), bestehend aus einem bewickelten Statorkern (3) mit mehreren ausgeprägten nach innen gerichteten Polen (4), welche in Umfangsrichtung mit einem Rückschlussring (5) einstückig und durch Statornuten (6) voneinander getrennt sind, einem Isolierstoffkörper (7), welcher die Statornuten (6) auskleidet und eine Rückschlussringabdeckung (8) aufweist, welche eine axiale Stirnseite des Rückschlussrings (5) abdeckt, wobei ein Wicklungsdraht (10) durchgängig ohne Unterbrechung nacheinander um alle Pole (4) zur Bildung jeweils einer Spule (39) gewickelt ist und die Spulen dabei in einer Dreieck-Parallel-Anordnung verschaltet.

Statorkerne mit ausgeprägten Polen können ein oder mehrteilig sein. Bei mehrteiligen Statorkernen lassen sich die Pole einzeln von außen z. B. durch einen Flyer bewickeln. Der mehrfach unterbrochene magnetische Kreis verringert jedoch den Wirkungsgrad deutlich, deshalb werden Statorkerne in Verlaufsrichtung der Magnetfeldlinien vielfach einteilig ausgeführt. Einteilige Statorkerne können aus einem Blechstapel oder aus gepresstem Metallpulver bestehen; sie werden in der Regel durch einen Nadelwickler bewickelt. Hierfür ist eine hohle Wickelnadel erforderlich, in welcher der Wicklungsdraht hindurchgeführt wird. Die Wickelnadel hat je nach Drahtdurchmesser einen Mindestdurchmesser. Für eine prozesssichere Fertigung ist zudem ein Mindestabstand zwischen der Wickelnadel und Statorbauteilen einzuhalten. Aus diesem Grund lassen sich herstellungsbedingt nicht alle Geometrien, die physikalisch möglich oder montagetechnisch wünschenswert wären realisieren. Damit der Wicklungsdraht oder ein Kontaktmittel für dessen elektrischen Anschluss nicht mit einem Motorgehäuse in Berührung kommen oder keine Kurzschlüsse über Kriechstrecken zustande kommen, müssen ausreichende Sicherheitsabstände eingehalten werden. In der Regel wird hierfür mehr Bauraum benötigt, indem das Gehäuse stufenartig erweitert ist.

Die US 2015/137637 A1 zeigt einen Stator eines Motors mit einer Stromschienenverschaltung, wobei ein Statorkern mit einer Mehrzahl von Statorzähnen vorgesehen ist, die von einem Isolator isoliert sind. Die Statorzähne umfassen eine Wicklung.

Aus der US 2013/270932 A1 ist ein Elektrowerkzeug mit einem bürstenlosen DC Motor bekannt.

Ferner zeigt die US 2018/262075 A1 eine Verschaltungsplatte eines Stators einer elektrischen Maschine, wobei die Verschaltungsplatte als Kunststoffkörper einen geschlossenen Ring aufweist, an dem einstückig genau drei sich in Axialrichtung erstreckende Halteelemente angeformt sind. In den Halteelementen erstrecken sich jeweils axiale Anschluss-Stecker aus Metall axial, wobei die axialen Anschluss-Stecker jeweils einstückig mit Leiterelementen ausgebildet sind, die elektrisch direkt mit Verbindungsdrähten der elektrischen Wicklung verbindbar sind.

Die EP 3 151 389 A2 offenbart eine rotierende elektrische Maschine mit einem Rotor und einem Statorkern mit mehreren Statorzähnen, an denen mehrere Wicklungen gewickelt sind, deren Enden mit Wicklungsverbindungsanschlüssen verbunden sind.

Weiterhin offenbart die DE 10 2015 211 836 A1 ein Verfahren zum Bewickeln eines Stators, wobei der Stator radiale Statorzähne und dazwischenliegende Nuten aufweist, wobei mittels Nadelwickeln eine erste Teilspule auf einen ersten Statorzahn gewickelt wird und anschließend an einer ersten axialen Stirnseite des Stators ein Verbindungsdraht zu einer zweiten Teilspule eines zweiten Statorzahns über einen radial beweglichen Schieber gewickelt wird.

Aufgabe der Erfindung ist es daher bei einem gattungsgemäßen Gleichstrommotor für einen kompakten Aufbau, eine prozesssichere Herstellung, eine einfache Montage und einen guten Wirkungsgrad zu sorgen.

Diese Aufgabe wird erfindungsgemäß durch die Merkmale des Verfahrensanspruchs 1 mit den folgenden Verfahrensschritten gelöst: a) Bereitstellung eines mit einem Isolierstoffkörper (7) versehenen Statorkerns (3), eines Motorgehäuses (15), eines Kontaktträgers (58), isolierten Sammelschienen (14), einer Isolationskrone 53 und eines Lagerschilds oder Anbauteils (65); b) Bereitstellung einer Fertigungseinrichtung; c) Einlegen des Statorkerns (3) in die Fertigungseinrichtung; d) Anschlagen eines Wicklungsdrahtes an einer werkzeug- oder werkstückfesten Anschlagstelle; e) Wickeln einer Spule um einen ersten Pol; f) gerades Herausführen des Wicklungsdrahtes aus einer Statornut mit einer radialen und eine axialen Komponente; g) Herumlegen des Wicklungsdrahtes (10) um Auflageprofile (90d), die auf werkstückfesten, entfernbaren Hilfsanformungen (61d) angeordnet sind; Zurückführen des Wicklungsdrahtes (10) in die Statornut (6) unter Bildung einer U-förmigen Drahtverbindung (18); h) Wiederholung der Verfahrensschritte e bis g, bis alle erforderlichen Spulen (39) hergestellt sind; i) Anschlagen des Wicklungsdrahts (10) an einer werkzeug- oder werkstückfesten Anschlagstelle; j) Trennen des Wicklungsdrahtes (10). k) Abscheren der Hilfsanformungen (61d). Beim radialen Herausführen des Wicklungsdrahts (10) werden die Schenkel (51, 52) um eine Innenkante 68 des Isolierstoffkörpers (7) gebogen. Die Wicklungsführungskontur kann aus einer während der Bewicklung abgestützten Anformung an den Isolierstoffkörper (7) bestehen, die später abgetrennt wird, wobei die Abstützung den Wickelzug aufnimmt. Alternativ kann die Wicklungsführungskontur aus werkzeugfesten Umlenkmitteln oder aus einer Kombination aus werkzeugfesten Umlenk- und werkstückfesten Haltemitteln bestehen. Im letzteren Fall halten die werkstückfesten Haltemittel die Drahtverbindung (18) temporär in einer definierten Stellung. Später werden die werkstückfesten Haltemittel wieder abgeschert.

Weiterbildungen der Erfindung werden nachfolgend anhand der Unteransprüche näher dargestellt.

Anschließend an den Wickelvorgang wird der Kontaktträger (58) axial auf den Isolierstoffkörper (7) aufgesetzt, wonach radial auskragende Axialanschläge (44) an axial vorspringenden Konturen (56) der Rückschlussringabdeckung (8) anliegen. Der Kontaktträger (58) zentriert sich bei der Montage an Innenkonturen einer Rückschlussringabdeckung (8).

Nachdem der Kontaktträger (58) montiert ist werden die U-förmigen Drahtverbindungen (18) in Richtung Motorlängsachse (19) unter Beibehaltung der U-Form soweit gebogen dass die Schenkel (51, 52) der Drahtverbindung (18) zumindest annähernd parallel oder geringfügig geneigt zur Motorlängsachse (19) verlaufen. Dabei stützen sich die Schenkel (51, 52) an Axialanschlägen (45) und an Außenkanten (69) des Kontaktträgers ab. Hierdurch ist ein definierter Biegevorgang möglich. Die Drahtverbindungen (18) befinden sich jetzt axial vor den Axialanschlägen (45).

Nachdem die Drahtverbindungen (18) ausgerichtet sind, werden die einzelnen Sammelschienen (14) und einzelnen Isolierelemente oder ein Baugruppe aus Sammelschienen (14) und Isolierelementen auf den Kontaktträger (58) montiert, wobei Kontakthaken (17) der Sammelschienen (14) auf Kontaktabschnitte (20) der Drahtverbindung (18) aufgelegt werden. Die Kontakthaken (17) reichen dabei bis in den Bereich der Rückschlussringabdeckung (8) radial vor.

Anschließend werden die Kontakthaken (17) mit den Kontaktabschnitten (20) der Drahtverbindung (18) mittels eines Hot-Staking-Verfahrens oder Widerstandsschweißverfahrens innig verbunden, wobei eine robuste elektrische Verbindung mit einem sehr geringen Übergangswiderstand entsteht.

Gemäß einer ersten Montagereihenfolge wird zunächst ein Permanentmagnetrotor in ein Motorgehäuse (15) eingeführt und erst danach der Stator (30) in das Motorgehäuse (15) eingepresst. Diese Reihenfolge ist dann notwendig, wenn ein topfförmiges Motorgehäusen vorhanden ist und der Innendurchmesser einer Kontakteinheit (16) geringer ist als der Außendurchmesser des Permanentmagnetrotors. Beim Einpressen des Stators (30) dienen als Führungen (54) vorgesehene axial durchgängige Ausnehmungen am Isolierstoffkörper (7) als Möglichkeit ein kronenartiges Einpresswerkzeug anzusetzen.

Bei anderen Voraussetzungen kann der Stator (30) auch vor Montage des Permanentmagnetrotors (15) eingepresst werden.

Gemäß einer speziellen Ausführungsform wird beim Einpressen des Stators (30) in das Motorgehäuse (15) ein Abknicken von Abdecklappen (101) aus einer radialen Ursprungsposition in eine axiale Endposition und Anordnen der abgeknickten Abdecklappen (101) zwischen der Kontakteinheit (16) und dem Motorgehäuse (15) bewirkt. Die Abdecklappen (101) sind über Filmscharniere (100) mit dem Isolierstoffkörper (7) verbunden und dienen einer besonders sicheren Isolierung der Drahtverbindung (18) und besonders der Kontakthaken (17) gegenüber dem Motorgehäuse (15).

Ein weiterer Verfahrensschritt ist durch das Aufsetzen einer Isolationskrone (53) auf die Kontakteinheit (16) und oder den Isolierstoffkörper (7) gekennzeichnet. Dieser Verfahrensschritt kann erst nach dem Einpressen des Stators (30) in das Motorgehäuse (15) erfolgen, weil die Führungen (54), in welche die Isolationskrone (53) eingeführt werden für das Einpresswerkzeug benötigt werden. Die Isolationskrone (53) kann die Kontakteinheit (16) und insbesondere die Kontakthaken (17) sowohl axial als auch radial gegenüber dem Motorgehäuse (15) oder einem Lagerschild oder Anbauteil (65) isolieren.

Schließlich wird ein Lagerschild oder ein Anbauteil (65), wie eine Pumpe an das Motorgehäuse montiert, eine Endprüfung durchgeführt und der Gleichstrommotor aus der Fertigungseinrichtung entnommen.

Bei einer alternativen Montagereihenfolge wird erst nach dem Einpressen des Stators (30) der Permanentmagnetrotor montiert und anschließend ein Lagerschild oder ein Anbauteil (65) befestigt, eine Endprüfung durchgeführt und der Gleichstrommotor aus der Fertigungseinrichtung entnommen.

Da der Wicklungsdraht (10) bei dem Gleichstrommotor zwischen zwei räumlich in Umfangsrichtung benachbarten Spulen (39) eine U-förmige Drahtverbindung (18) bildet, welche einen ersten Schenkel (51), einen zweiten Schenkel (52) und einen beide Schenkel (51, 52) verbindenden Kontaktabschnitt (20) aufweist, welcher axial über einen Wicklungskopf hinaus angeordnet ist und radial einen deutlichen Abstand von einer zylindrischen Umhüllenden des Statorkerns (3) aufweist und der Isolierstoffkörper (7) den Bauraum des Stators (30) radial nicht vergrößert, lässt sich ein prozesssicher Aufbau mit frei zugänglichen Kontaktbereichen und einfach zu montierenden Einzelteilen realisieren. Der Bauraum soll auch durch andere Bauteile, die für die Kontaktierung der Wicklung erforderlich sind, nicht radial erweitert werden.

Es ist vorgesehen, dass die Drahtverbindung (18) nicht um axial oder radial nach außen vorspringende Umlenkgeometrien des Isolierstoffkörpers (7) verläuft, weil jede zusätzliche Umlenkung des Wicklungsdrahts die Taktzeiten bei der Fertigung erhöht und den Werkzeugverschleiß vergrößert.

Die vorliegende Erfindung betrifft insbesondere Gleichstrommotoren bei denen der Wickelsinn von räumlich in Umfangsrichtung benachbarten Spulen gegensinnig ist. Die Drahtverbindung (18) besteht dabei zwischen zwei räumlich benachbarten Spulenseiten zweier benachbarter Spulen (39).

Um ein prozesssicheres Fertigungsverfahren zu ermöglichen ist vorgesehen, dass der Kontaktabschnitt (20) axial über den Isolierstoffkörper (7) hinaus angeordnet ist. Dadurch ist der Kontaktabschnitt (20) von allen Seiten gut zugänglich und für eine Kontaktierung vorbereitet.

Um diese Anordnung zu ermöglichen ist weiter vorgesehen, dass ein Winkel zwischen einem Schenkel (51 oder 52) der Drahtverbindung (18) und der Motorlängsachse (19) kleiner oder gleich 45°, insbesondere kleiner oder gleich 30°, insbesondere kleiner oder gleich 15°, insbesondere kleiner oder gleich 10°, insbesondere kleiner oder gleich 5°, insbesondere kleiner oder gleich 2°, insbesondere kleiner oder gleich 1°, insbesondere gleich 0° ist. Je weiter der Kontaktabschnitt (20) vom Wicklungskopf entfernt ist, desto besser ist die Zugänglichkeit für Montage- und/oder Kontakteinrichtungen zur Kontaktierung des Kontaktabschnitts (20). Zudem sind die Abstände zwischen benachbarten Kontakten einerseits und gegenüberliegenden Kontakten andererseits größer. Bevorzugt wird deshalb eine möglichst eine parallele Ausrichtung der Schenkel (51 oder 52) zur Motorlängsachse. Dadurch ist auch noch ein ausreichender Abstand der Kontaktabschnitte (20) von einer radialen Begrenzung eines Statoreinbauraums gegeben.

Bei einer guten Zugänglichkeit des Kontaktabschnitts (20) der Drahtverbindung (18) lässt sich dieser vor allem leichter mit einem Kontakthaken (17) einer Kontakteinheit (16) elektrisch kontaktierten. Dabei ist zu beachten, dass der Kontakthaken (17) einen deutlichen Abstand von einem Außenrand des Statorkerns (3) aufweist. Durch diese Ausgestaltung wird sichergestellt, dass kein radialer Aufbau über den Statorkern (3) hinaus notwendig ist. Damit lässt sich ein kompakter Motoraufbau realisieren und die Gefahr von Kurzschlüssen reduzieren. Geringe Ungenauigkeiten der radialen Lage der Kontaktabschnitte (20) kann durch die Kontakthaken (17) ausgeglichen werden.

Es wird vorgeschlagen, dass die Kontakthaken (17) auf einem Referenzkreis (50) liegen. Der Referenzkreis (50) ist durch die maximale Nuttiefe einer Statornut (6) definiert. In dieser Position sind der Kontaktabschnitt (20) und die Kontakthaken (17) ausreichend von einem Motorgehäuse (15) entfernt und die erforderlichen Kriechstrecken werden eingehalten.

Das distale Ende der Kontakthaken (17) ist geschlossen. In Richtung Drahtverbindung (18) sind die Kontakthaken (17) bei ihrer Montage offen ausgebildet, so dass diese einfach axial gefügt werden können. Um die Kontaktabschnitte (20) einfacher einfangen zu können sind die beiden Schenkel der Kontakthaken zweckmäßigerweise nicht parallel sondern V-förmig vorgeformt.

Weiter ist vorgesehen, dass die Kontakteinheit (16) einen Kontaktträger (58) und mehrere voneinander isolierte Sammelschienen (14) aufweist, wobei der Kontaktträger (58) im Bereich der Rückschlussringabdeckung (8) mit mehreren Axialanschlägen (44) axial an dem Isolierstoffkörper (7) anliegt. Die Axialanschläge (44) bilden eine definierte Auflagefläche. Der Kontaktträger (58) kann die Sammelschienen (14) in einer definierten Lage aufnehmen und ausrichten. Die Kontakteinheit (16) wird am Isolierstoffkörper (7) zentriert.

Zweckmäßigerweise liegen die Axialanschläge (44) an axial vorspringende Konturen (56) des Isolierstoffkörpers (7) an. Diese können nach den jeweiligen Erfordernissen an die Axialanschläge (44) angepasst werden.

Eine Besonderheit besteht darin, dass mehrere Axialanschläge (44) radial über zugeordnete Kontaktabschnitte (20) vorstehen und axial zwischen den zugeordneten Kontaktabschnitten (20) und dem Isolierstoffkörper (7), insbesondere den axial vorspringenden Konturen (56) des Isolierstoffkörpers (7) angeordnet sind. Aus montagetechnischen Gründen sind daher die Drahtverbindungen (18) in einem Zwischenzustand radial nach außen gebogen.

Darüber hinaus soll die Anzahl der Kontaktabschnitte (20) der Anzahl der Pole (4) entsprechen, wobei einer dieser Kontaktabschnitte durch einen Wicklungsanfang und ein Wicklungsende der Statorwicklung gebildet ist. Die Kontaktabschnitte (20) verteilen sich dabei gleichmäßig über den Isolierstoffkörper (7) des Stators (30).

In einem Spezialfall ist der erste Schenkel (51) eine Verlängerung einer Endwindung der Spule (39) eines ersten Pols (4), während eine Verlängerung des zweiten Schenkels (52) eine Anfangswindung der Spule eines benachbarten Pols bildet. Ein Vorteil dieser Maßnahme besteht auch darin, dass der Nadelwickler keine engen Kurven abfahren muss und die Taktzeiten relativ kurz sein können.

Die Erfindung ist auch dadurch gekennzeichnet, dass zwischen der Endwindung und dem ersten Schenkel (51) und/oder zwischen einer Anfangswindung und dem zweiten Schenkel (52) eine erste Biegestelle (66) radial nach außen und anschließend eine zweite Biegestelle (67) radial nach innen vorhanden ist. Die erste Biegestelle (66) entsteht bereits beim Nadelwickeln, indem die Drahtverbindungen zunächst radial nach außen, insbesondere schräg nach außen verlegt werden, um die Bewicklung des Stators zu vereinfachen.

Bei den Biegevorgängen wird der Wicklungsdraht (10) zunächst um eine Innenkante (68) des Isolierstoffkörpers (7) gebogen. Die zweite Biegestelle (67) ist axial weiter vom Statorkern (3) entfernt und erfolgt um eine Außenkante (69) des Kontaktträgers (58). Durch die beiden Biegeradien wird der Wicklungsdraht (10) nur geringfügig verformt. Neben der Außenkante (69) können Drahtanschlagflächen (45) am Kontaktträger (58) vorgesehen sein, die ein definiertes Zurückbiegen der Drahtverbindungen erlaubt. Die genannten Vorteile werden auch mit geringen Abweichungen von der parallelen Ausrichtung der Schenkel (51, 52) noch gewahrt.

Bei einer Abweichung von maximal 15° ändert sich die axiale Lage der Kontaktabschnitte (20) nur geringfügig.

Um definierte Verhältnisse zu erhalten, wird vorgeschlagen, dass das Spulenende des ersten Pols (4) und der Spulenanfang des zweiten Pols radial im Bereich der größten Nuttiefe der Statornuten (6) angeordnet sind.

Um einen kompakten Aufbau zu erhalten ist weiter vorgesehen, dass der Abstand des radial äußeren Bereichs des Kontakthakens (17) von der Motorlängsachse (19) geringer ist als der Radius des Rückschlussrings (5).

Um eine gute Drahtführung während des Wickelvorgangs zu erhalten wird vorgeschlagen, dass die Rückschlussringabdeckung (8) axial vorspringende Konturen aufweist, die an den Positionen der Spulenanfängen und Spulenenden radial geschlitzt sind, wobei die Breite der Schlitze (55) mindestens dem Wicklungsdrahtdurchmesser entspricht.

Damit die Kontakte sicher isoliert werden können sind in den vorspringenden Konturen im Winkelbereich zwischen benachbarten Drahtverbindungen (18) Führungen (54) für eine Isolationskrone (53) eingeformt. Hierdurch wird die räumliche Zuordnung der zu fügenden Bauteile erleichtert.

Weiter ist vorgesehen, dass der Kontakthaken mit dem Kontaktabschnitt (20) der Drahtverbindung verschweißt ist. Hierzu eignen sich besonders Hot-Staking-Verfahren oder Widerstandsschweißverfahren. Durch diese Verfahren werden die Schweißpartner teilweise aufgeschmolzen, wodurch eine innige stoffschlüssige Verbindung entsteht und ein besonders niedriger Übergangswiderstand erreichbar ist.

Damit es nicht zu Kurzschlüssen zwischen den Kontakthaken (17) und einem Motorgehäuse (15) kommen kann, sind Isoliermittel vorgesehen, welche zwischen den Kontakthaken (17) und dem Motorgehäuse (15) angeordnet sind.

Bei einer zweiten Ausführungsform der Erfindung ist weiter vorgesehen, dass die Isoliermittel Abdecklappen (101) sind, welche über Filmscharniere (100) mit dem Isolierstoffkörper (7) verbunden sind.

Zweckmäßigerweise sind die Filmscharniere (100) in tangentialer Richtung ausgerichtet und im Bereich zwischen der Statornutauskleidung (29) und der Rückschlussringabdeckung (8) angeordnet. Hierdurch lässt sich eine sichere Isolierung der Kontakthaken zum Motorgehäuse auf zuverlässige Weise herstellen, wobei die Abdecklappen (101) während der Montage abgeklappt sind und den Wicklungsvorgang nicht behindern.

Alternativ kann das Isoliermittel einstückig mit der Isolationskrone (53) sein, insbesondere in Form von Abdecklappen (101). Hierdurch kann der Isolierstoffkörper (7) einfacher ausgebildet sein und die Abdecklappen können ohne Filmscharniere mit der Isolationskrone (53) einstückig sein.

Ausführungsbeispiele der Erfindung werden nachfolgend anhand der Zeichnung näher erläutert. Es zeigen:
- Fig. 1: eine erste Ausführungsform eines Stators eines Gleichstrommotors mit einer ersten Ausführungsform eines Isolierstoffkörpers in einem ersten Montagezustand,
- Fig. 2: eine Schnittansicht des Gleichstrommotors mit Überlagerung des ersten Montagezustands,
- Fig. 3: den Stator mit einer Überlagerung des ersten mit einem zweiten Montagezustand,
- Fig. 4: eine Vorderansicht des Stators mit dem überlagerten ersten und zweiten Montagezustand,
- Fig. 5: den Stator in einem zweiten Montagezustand,
- Fig. 6: den Stator in einem dritten Montagezustand,
- Fig. 7: den Stator im ersten Montagezustand mit werkzeugfesten Umlenkmitteln,
- Fig. 8: eine Variante des Stators mit Werkstückfesten entfernbaren Hilfsanformungen,
- Fig. 9: eine weitere Variante des Stators mit einer Kombination aus werkzeugfesten Umlenkmitteln und entfernbaren Hilfsanformungen,
- Fig. 10: eine weitere Ansicht des Stators gemäß Fig. 6,
- Fig. 11: eine zweite Ausführungsform eines Stators in einem ersten Montagezustand,
- Fig. 12: eine zweite Ausführungsform eines Isolierstoffkörpers,
- Fig. 13: den Stator der zweiten Ausführungsform in einem zweiten Montagezustand,
- Fig. 14: den Stator der zweiten Ausführungsform in einem dritten Montagezustand mit einer ersten Ausführungsform einer Isolationskrone,
- Fig. 15: den Stator der zweiten Ausführungsform in einem vierten Montagezustand,
- Fig. 16: eine alternative Isolationskrone,
- Fig. 17: eine Ansicht eines montierten Stators gemäß der zweiten Ausführungsform,
- Fig. 18: eine Schnittansicht des montierten Stators der zweiten Ausführungsform,
- Fig. 19: einen Kontaktträger,
- Fig. 20: eine Darstellung der Lage des Referenzkreises und
- Fig. 21: eine Drahtverbindung mit Biegestellen.

Hinweis: Bezugszeichen mit Index und entsprechende Bezugszeichen ohne Index bezeichnen namensgleiche Einzelheiten in den Zeichnungen und der Zeichnungsbeschreibung. Es handelt sich dabei um die Verwendung in einer anderen Ausführungsform, dem Stand der Technik und/oder die Einzelheit ist eine Variante. Die Ansprüche, die Beschreibungseinleitung, die Bezugszeichenliste und die Zusammenfassung enthalten der Einfachheit halber nur Bezugszeichen ohne Index.

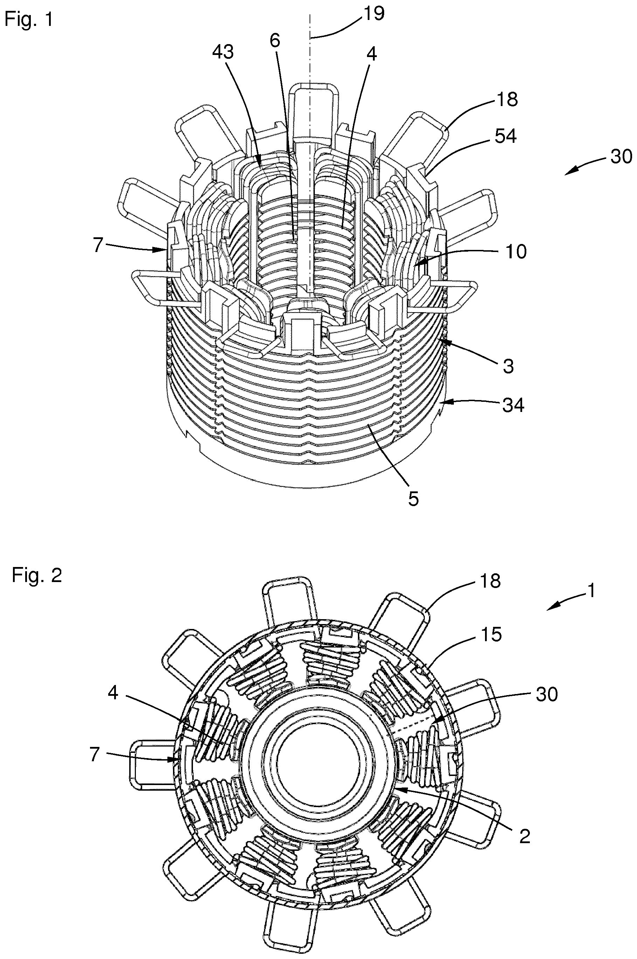

Fig. 1 zeigt eine erste Ausführungsform eines Stators 30 eines Gleichstrommotors mit einer ersten Ausführungsform eines Isolierstoffkörpers 7 in einem ersten Montagezustand, bei welchem der Stator 30 bereits mit einem Wicklungsdraht 10 bewickelt ist. Der Stator 30 besteht aus einem Statorkern 3 aus geschichteten Blechlamellen und weist im vorliegenden Beispiel neun Pole 4 auf, die sich von einem Rückschlussring 5 ausgehend radial nach innen in Richtung einer Motorlängsachse 19 erstrecken. Zwischen jedem Pol 4 ist eine Drahtverbindung 18 radial über den Außendurchmesser des Statorkerns 3 und des Isolierstoffkörpers 7 hinausgehend ausgeführt, wobei die Drahtverbindung eine axiale Komponente aufweist und daher um einen Schrägungswinkel in Richtung eines Wicklungskopfes geneigt ist. Der Schrägungswinkel ist so gewählt, dass eine Nadelwickelmaschine eine möglichst geringe Taktzeit erreicht und eine prozesssichere Montage möglich ist. Weiter ist eine Isolationskappe auf der gegenüberliegenden Axialseite des Statorkerns dargestellt. Der Isolierstoffkörper weist axial vorspringende Führungen 54 auf.

Fig. 2 zeigt eine Schnittansicht des Gleichstrommotors mit Überlagerung des ersten Montagezustands. Gezeigt ist der Stator 30 mit dem Isolierstoffkörper 7, eingebaut in einem Motorgehäuse 15. Gegenüber den Polen 4 befindet sich ein permanentmagnetischer Innenrotor 2. Die Drahtverbindungen 18 sind im eingebauten Zustand in der Realität nicht mehr in dem Montagezustand aus Fig. 1, sondern liegen innerhalb des Motorgehäuses. Zur Veranschaulichung der geometrischen Verhältnisse während des Wickelverfahrens, sind die Drahtverbindungen 18 in radialer Lage dargestellt.

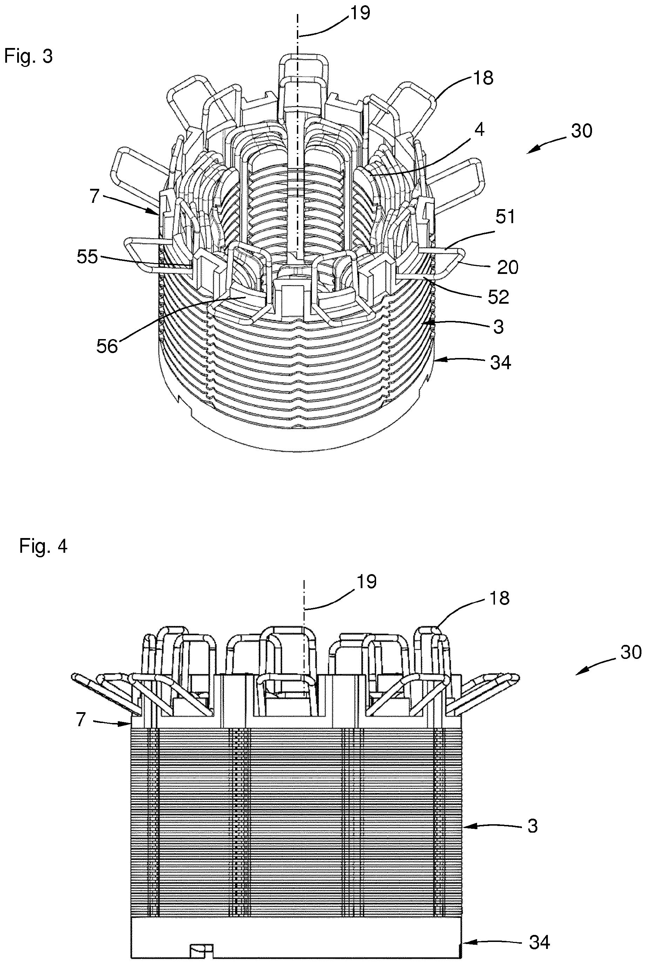

Fig. 3 zeigt den Stator 30 mit einer Überlagerung des ersten mit einem zweiten Montagezustand. Hierbei sind die Drähte im aus der Fig. 1 bekannten Lage dargestellt und zusätzlich ein einer zweiten Lage, die sich nach einem Biegevorgang einstellt, wobei die Drahtverbindungen 18 sich im Wesentlichen achsparallel über den Wicklungskopf 43 vom Statorkern weg erstrecken. Der Isolierstoffkörper 7 weist axial vorspringende Konturen 56 auf, die durch Schlitze 55 unterbrochen sind, durch welche sich die Drahtverbindungen 18 während des Wickelvorgangs und beim Zurückbiegen bewegen können. Die Drahtverbindungen 18 bestehen aus einem ersten Schenkel 51, einem zweiten Schenkel 52 und einem Kontaktabschnitt 20. Der erste Schenkel 51 ist eine Verlängerung einer Endwindung eines ersten Pols 4. Eine Verlängerung des zweiten Schenkels 52 bildet eine Anfangswindung eines benachbarten Pols. Weiter sind der Statorkern 3 und die Isolationskappe 34 und die Motorlängsachse 19 dargestellt.

Fig. 4 zeigt eine Vorderansicht des Stators 30 mit dem überlagerten ersten und zweiten Montagezustand gemäß Fig. 3, mit dem Isolierstoffkörper 7, dem Statorkern 3, der Isolationskappe 34, den Drahtverbindungen 18 und der Motorlängsachse.

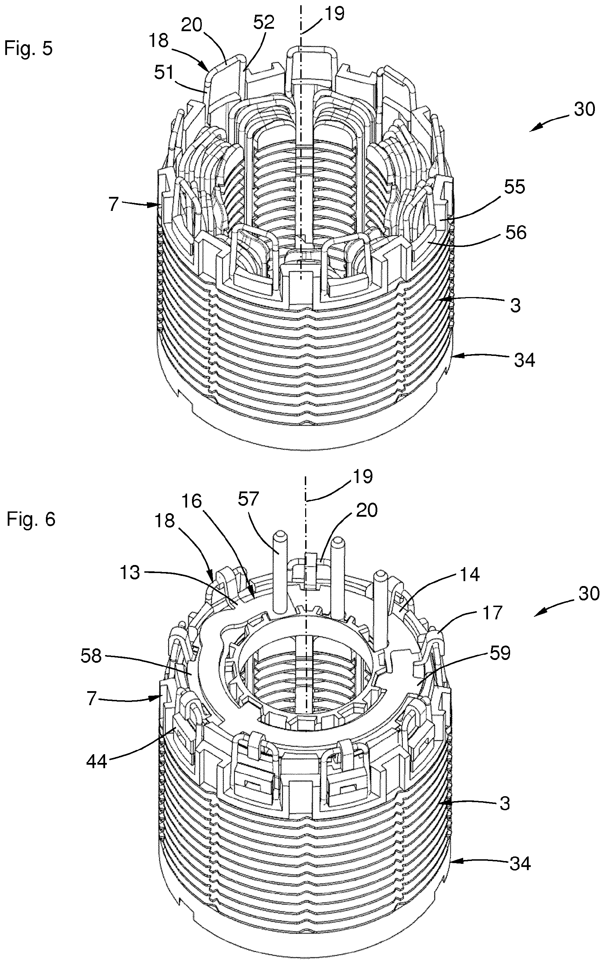

Fig. 5 zeigt den Stator 30 in einem zweiten Montagezustand, bei welchem die Drahtverbindungen 18 in eine im Wesentlichen achsparallele Lage gebogen sind. Die Schlitze 55 in den axial vorspringenden Konturen 56 des Isolierstoffkörpers 7 haben in diesem Zustand keine Funktion mehr. Die Drahtverbindungen 18 sind in dieser Lage für die Montage einer Kontakteinheit vorbereitet und weisen für eine prozesssichere Kontaktierung freiliegende und sehr gut zugängliche Bereiche auf (Kontaktabschnitt 20). Hierfür ist die Länge der Schenkel 51, 52 entsprechend dimensioniert. Der Kontaktabschnitt 20 ist in seinem mittleren Abschnitt geradlinig ausgeführt und ist somit großflächig als Kontaktfläche verwendbar. Weiter sind in Fig. 5 der Statorkern 3, die Motorlängsachse 19 und die Isolierkappe 34 gezeigt.

Fig. 6 zeigt den Stator 30 in einem dritten Montagezustand, mit der Isolationskappe 34, der Motorlängsachse, dem Statorkern 3, dem Isolierstoffkörper 7, Drahtverbindungen 18 und eine Kontakteinheit 16, bestehend aus drei Sammelschienen 14 mit jeweils drei Kontaktvorsprüngen 13, an denen Kontakthaken 17 angeformt sind, welche mit je einer Drahtverbindung 18, insbesondere mit einem Kontaktabschnitt 20 verbunden sind. Die offene Seite der Kontakthaken 17 weist zum Statorkern 3 hin. Jede Sammelschiene 14 ist mit einem Anschlussstift 57 verbunden, welcher achsparallel aus der Sammelschiene 14 vorspringt. Die Sammelschienen 14 sind auf einem Kontaktträger 58 voneinander isoliert gehalten. Die Sammelschienen 14 weisen radiale Erweiterungen 59 auf, mit denen sie im Isolierstoffkörper 7 zentriert und gegen Verdrehen gesichert werden. Der Kontaktträger 58 sitzt über Axialanschläge 44 auf dem Isolierstoffkörper 7 axial auf.

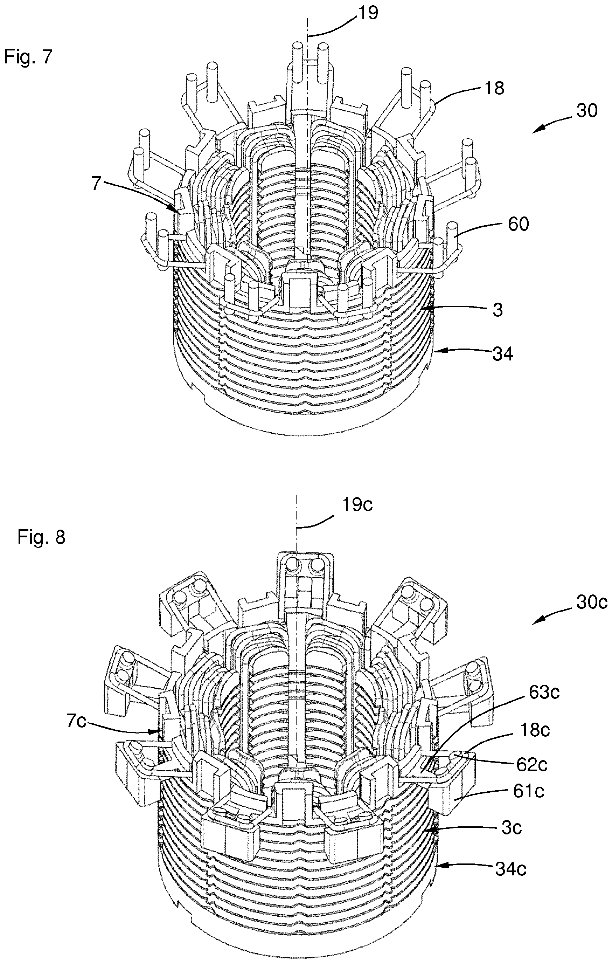

Fig. 7 zeigt den Stator 30 im ersten Montagezustand mit werkzeugfesten Umlenkmitteln 60. Jeder Drahtverbindung 18 sind zwei Umlenkmittel 60 zugeordnet.

Fig. 8 zeigt eine Variante des Stators 30c mit Werkstückfesten entfernbaren Hilfsanformungen 61c, mit Umlenkzapfen 62c und abtrennbaren Verbindungsmitteln 63c. Die Hilfsanformungen 61c sind einstückiger Bestandteil eines Isolierstoffkörpers 7c. Weiter sind die Isolierkappe 34 und der Statorkern 3c zu erkennen. Die Hilfsanformungen 61c weisen Ausnehmungen auf, die zur Aufnahme von werkzeugfesten Stützmitteln dienen.

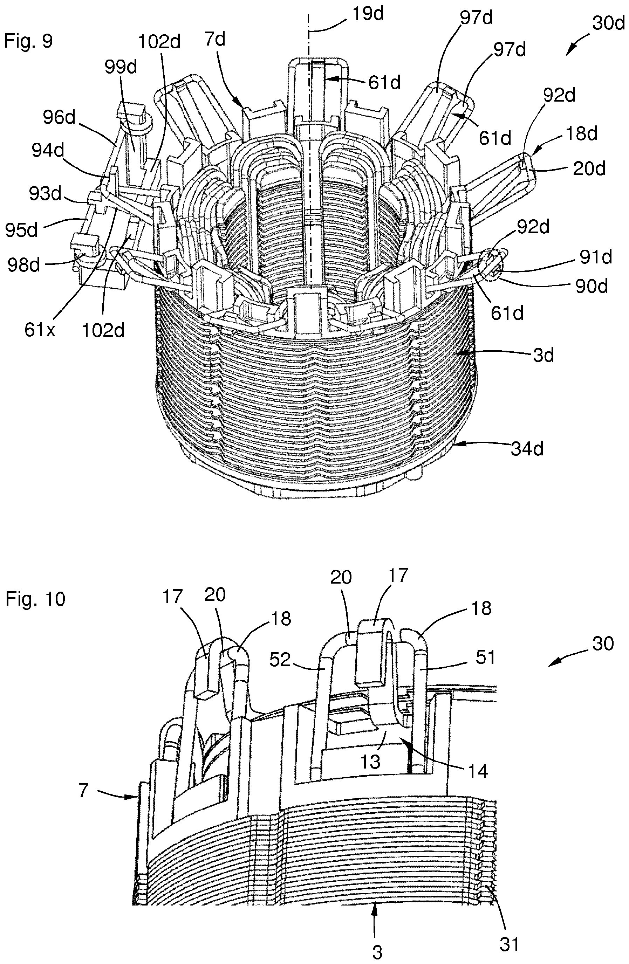

Fig. 9 zeigt eine weitere Variante des Stators 30d mit einer Kombination aus werkzeugfesten Umlenkmitteln (nicht dargestellt) und entfernbaren Hilfsanformungen 61d. Die Hilfsanformungen 61d erstrecken sich ausgehend von einem Isolierstoffkörper 7d, mit dem sie einstückig sind, mit einer axialen und einer radialen Komponente schräg nach außen. Die Hilfsanformungen 61d enden in einem L-förmigen Auflageprofil 90d mit einem radialen Arm 91d und einem axialen Arm 92d. Die Hilfsanformungen 61d, insbesondere die Auflageprofile 90d dienen als Auflage für eine Drahtverbindung 18d. Beiderseits der Hilfsanformung 61d sind Freiräume 97d zu erkennen, welche durch Herumführen des Wicklungsdrahts um die werkzeugfesten Umlenkmittel (hier nicht dargestellt) und anschließendes Zurückziehen der Umlenkmittel gebildet wurden. Einer der Hilfsanformungen 61x weist einen Startanschlagzapfen 98d, einen Endanschlagzapfen 99d, eine Startdrahtauflage 93d und eine Enddrahtauflage 94d auf. Die Hilfsanformung und die Anschlagzapfen sind durch zwei L-förmige Ausleger 102d miteinander einstückig. Ein Startdraht 95d verläuft unter einem anderen Winkel als der Enddraht 96d schräg nach außen. Dadurch weisen die Enddrähte einen Abstand voneinander auf, der ein Abtrennen des Wickeldrahts erleichtert. Die Hilfsanformungen 61d werden vor dem Einpressen des Stators 30d in ein Motorgehäuse abgeschert. Weiter sind in Fig. 9 Drahtverbindungen 18d, Kontaktabschnitte 20d, eine Motorlängsachse 19d, ein Statorkern 3d und eine Isolationskappe 34d dargestellt.

Fig. 10 zeigt eine weitere Ansicht des Stators gemäß Fig. 6. Hier sind insbesondere die Kontakthaken 17 und die Drahtverbindungen 18 deutlicher zu erkennen. Der erste Schenkel 51 der Drahtverbindung 18 erstreckt sich axial aus einer Statornut, geht in den Kontaktabschnitt 20 über und weiter in den zweiten Schenkel 52, der axial in dieselbe Statornut zurückführt. Die Sammelschiene 14 ist mit dem Kontaktvorsprung 13 und dem Kontakthaken 17 einstückig. Im Kontakthaken 17 ist der Kontaktabschnitt 20 der Drahtverbindung 18 aufgenommen und bildet einen elektrischen Kontakt mit dem Kontakthaken. Weiter ist der Statorkern 3 dargestellt, welcher Klemmzungen 31 aufweist, mit deren Hilfe er sich im Motorgehäuse (hier nicht dargestellt) festklemmen kann.

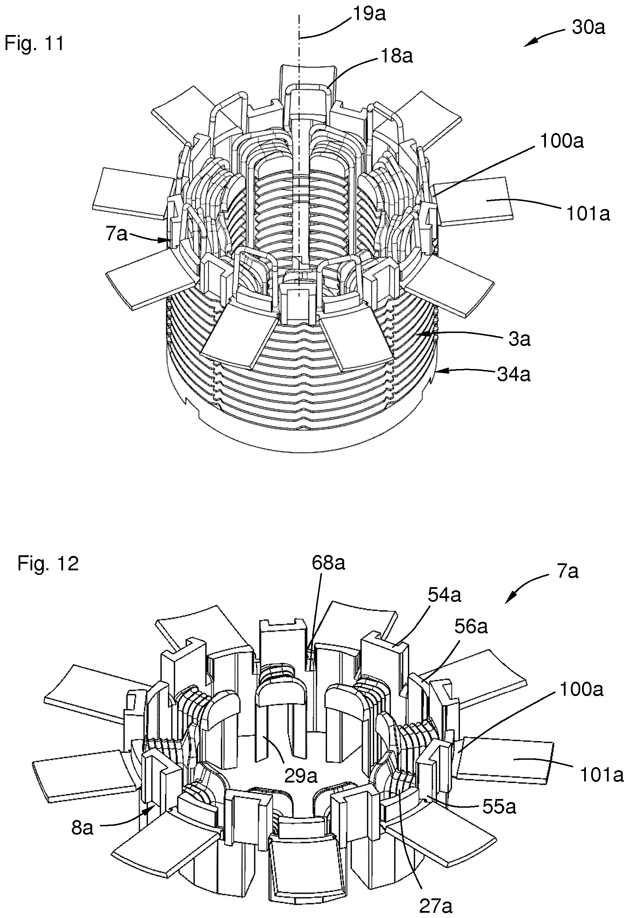

Fig. 11 zeigt eine zweite Ausführungsform eines Stators 30a, mit einer Isolationskappe 34a, einem Statorkern 3a, einem Isolierstoffkörper 7a, Drahtverbindungen 18a, einer Motorlängsachse 19a und Abdecklappen 101a, die über Filmscharniere 100a mit dem Isolierstoffkörper 7a einstückig sind. Für die Bewicklung des Stators 30a sind die Abdecklappen 101a zur Motorlängsachse 19a abgewinkelt ausgeführt. Im vorliegenden Beispiel beträgt der Winkel ca. 90°. Die Drahtverbindungen 18a sind im bereits zurückgebogenen Zustand dargestellt.

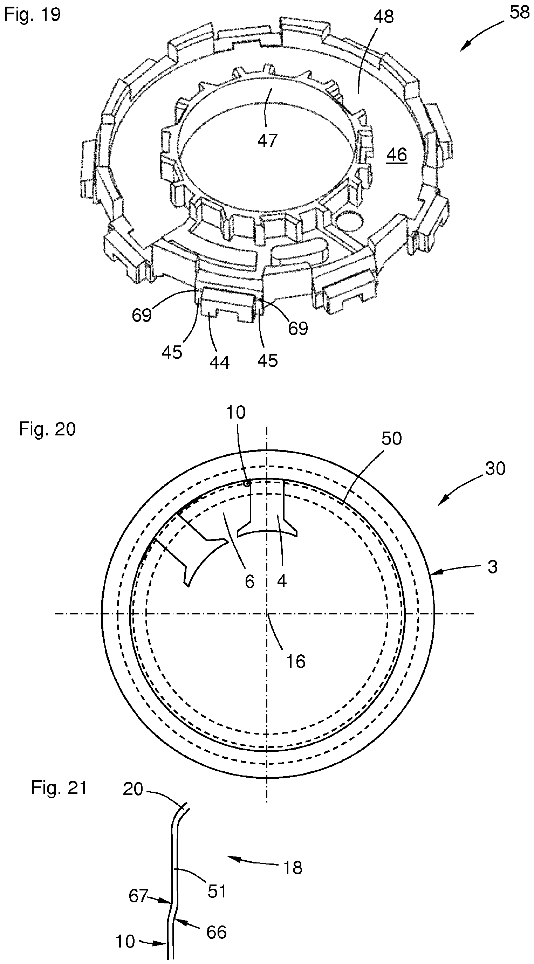

Fig. 12 zeigt eine zweite Ausführungsform eines Isolierstoffkörpers 7a als Einzelbauteil. Dieser weist im Einzelnen eine Statornutauskleidung 29a je Pol, mit Rillen 27a, eine Rückschlussringabdeckung 8a, die Abdecklappen 101a, die Filmscharniere 100a, Führungen 54a, Konturen 56a und Schlitze 55a auf. An einer Innenkante 68a wird der Wicklungsdraht radial nach außen gebogen (siehe auch Fig. 19).

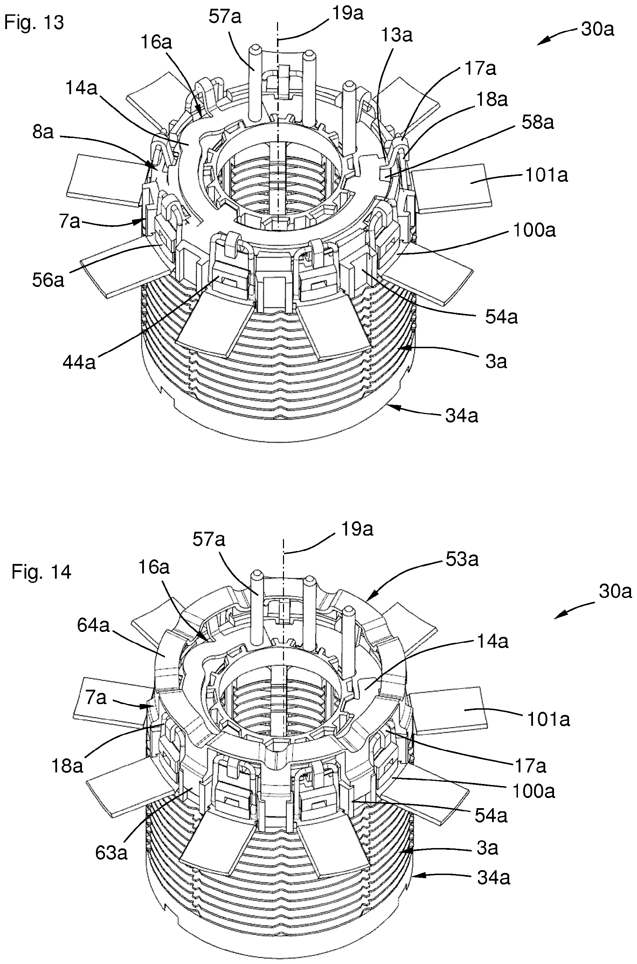

Fig. 13 zeigt den Stator 30a der zweiten Ausführungsform in einem zweiten Montagezustand, mit der Isolationskappe 34a, dem Statorkern 3a, dem Isolierstoffkörper 7a, den Abdecklappen 101a, den Filmscharnieren 100a, den Drahtverbindungen 18a, der Motorlängsachse 19a und einer Kontakteinheit 16a, mit Sammelschienen 14a, Kontaktvorsprüngen 13a, Kontakthaken 17a, einem Kontaktträger 58a mit Axialanschlägen 44a, die an vorspringenden Konturen 56a anliegen und Anschlussstiften 57a. Die Abdecklappen 101a sind so angeordnet, dass sie nach einem Umklappprozess eine Abdeckung und Isolierung für die Drahtverbindungen 18a und die Kontakthaken 17a bilden. Ihre Breite ist so gewählt, dass sie genau zwischen Führungen 54a passen, die axial aus der Rückschlussringabdeckung 8a vorspringen.

Fig. 14 zeigt den Stator 30a, der zweiten Ausführungsform in einem dritten Montagezustand. Zusätzlich zu Fig. 12 ist hier eine ringförmige Isolationskrone 53a, bestehend aus einem Abdeckring 64a und axial vorspringende Kronenfüßen 63a, auf den Isolierstoffkörper 7a aufgesetzt. Dabei sind Kronenfüße 63a in die Führungen 54a (siehe Fig. 12) eingeführt. Diese sind so dimensioniert, dass sie radial nicht über den Statorkern 3a hinausragen. Weiter sind gezeigt die Isolationskappe 34a, die Kontakteinheit 16a, die Kontakthaken, die Drahtverbindungen 18a, die Anschlussstifte 57a, die Abdecklappen 101a und die Filmscharniere 100a.

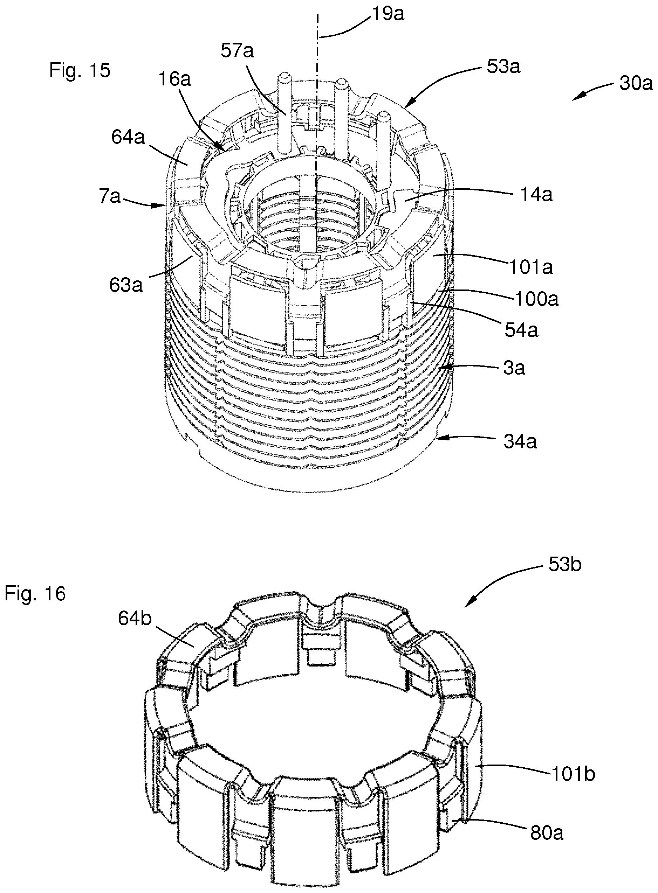

Fig. 15 zeigt den Stator 30a der zweiten Ausführungsform in einem vierten Montagezustand. Hierbei sind die Abdecklappen 101a umgeklappt und tauchen in den Raum zwischen den Führungen 54a ein, so dass sie radial nicht aufbauend wirken. Weiter sind gezeigt die Sammelschienen 14a, die Anschlussstifte 57a, die Motorlängsachse 19a, der Isolierstoffkörper 7a, die Isolationskrone 53a, mit dem Abdeckring 64a und den Kronenfüßen 63a, die in die Führungen 54a eintauchen, die Isolationskappe 34a, die Filmscharniere 100a und der Kontaktträger.

Fig. 16 zeigt eine alternative Isolationskrone 53b, mit einem Abdeckring 64b und Abdecklappen 101b. Die Isolationskrone 53b ist vorgesehen nach dem Einpressen eines Stators in ein Motorgehäuse auf den Stator aufgesetzt zu werden, wobei sich die Abdecklappen zwischen Kontakthaken einer Kontakteinheit und dem Motorgehäuse anordnen. Zwischen den Abdecklappen sind Führungsvorsprünge 80b angeordnet, die zum Eingriff in Führungen eines Isolierstoffkörpers vorgesehen sind. Die Isolationskrone 53b dient auch als Fänger von Spänen, die beim Einpressen des Stators entstehen können.

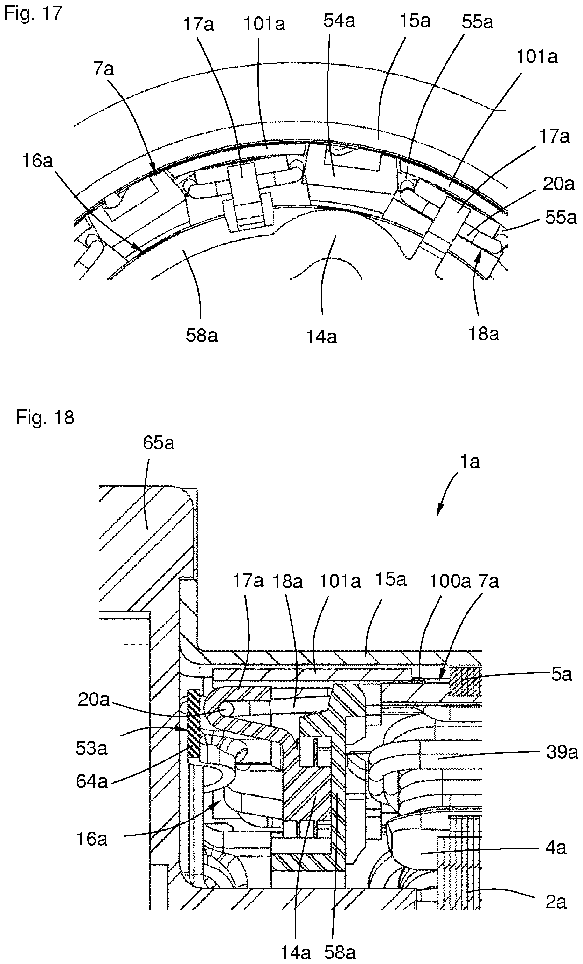

Fig. 17 zeigt den Stator 30a der zweiten Ausführungsform in einem vierten Montagezustand, in dem dieser in einem Motorgehäuse 15a eingebaut ist. Weiter sind der Isolierstoffkörper 7a, die Kontakteinheit 16a, die Sammelschienen 14a, die Drahtverbindungen 18a, die Kontakthaken 17a, die Führungen 54a, die Schlitze 55a und die Abdecklappen 101a dargestellt.

Fig. 18 zeigt eine Schnittansicht eines Gleichstrommotors 1a mit dem im Motorgehäuse 15a montierten Stator 30a der zweiten Ausführungsform, mit einer Spule 39a, dem Statorkern 3a, dem Rückschlussring 5a, dem Innenrotor 2a, dem Isolierstoffkörper 7a, die Kontakteinheit 16a, dem Pol 4a, der Sammelschiene 14a, dem Kontakthaken 17a, dem Kontaktträger 58a, dem Kontaktabschnitt 20a der Drahtverbindung 18a, der Abdecklasche 101a, dem Filmscharnier 100a, der Isolationskrone 53a, mit dem Abdeckring 64a und einem Anbauteil 65a, welches das Motorgehäuse 15a schließt.

Fig. 19 zeigt einen in seiner Grundform ringförmigen Kontaktträger 58, dessen Querschnittsform in erster Näherung U-förmig ist, mit einem Innenrand 47, einem Außenrand 48 und einem Boden 46. Der Bereich zwischen Innenrand 47, Außenrand 48 und Boden dient als Aufnahmeraum für die Sammelschienen (hier nicht dargestellt). Am Außenrand 48 sind Drahtanschlagflächen 45 angeordnet. Die Drahtanschlagflächen 45 weisen jeweils eine Außenkante 69 auf, um welche der Wicklungsdraht gebogen wird. Zwischen jeweils zwei Drahtanschlagflächen ist ein radial nach außen vorspringender Axialanschlag 44 angeordnet.

Fig. 20 zeigt eine Darstellung der Lage eines Referenzkreises 50 um die Motorlängsachse 16, dessen Radius durch die Mittellinie eines axial verlaufenden Wicklungsdrahtes 10 mit der radial äußerst möglichen Position innerhalb des bewickelbaren Wickelraums einer Statornut 6 definiert ist. Weiter ist der Stator 30 mit dem Statorkern 3 und den Polen 4 dargestellt. Zwei weitere gestrichelte Kreise deuten an, dass die Drahtverbindungen nur in einem begrenzten Bereich sinnvoll anzuordnen sind.

Fig. 21 zeigt eine Drahtverbindung 18, ausgehend von einem Wicklungsdraht 10 einer Spule ist der erste Schenkel 51 zunächst an einer Biegestelle 66 radial nach außen und anschließend an einer zweiten Biegestelle 67 radial nach gebogen. Ein Kontaktabschnitt 20 ist angedeutet. Der nicht gezeigte zweite Schenkel ist analog ausgeführt.

### Bezugszeichenliste

- 1: Gleichstrommotor
- 2: Innenrotor
- 3: Statorkern
- 4: Pol
- 5: Rückschlussring
- 6: Statornut
- 7: Isolierstoffkörper
- 8: Rückschlussringabdeckung
- 10: Wicklungsdraht
- 13: Kontaktvorsprung
- 14: Sammelschiene
- 15: Motorgehäuse
- 16: Kontakteinheit
- 17: Kontakthaken
- 18: Drahtverbindung
- 19: Motorlängsachse
- 20: Kontaktabschnitt
- 27: Rille
- 29: Statornutauskleidung
- 30: Stator
- 31: Klemmzunge
- 34: Isolationskappe
- 39: Spule
- 43: Wicklungskopf
- 44: Axialanschlag
- 45: Drahtanschlagfläche
- 46: Boden
- 47: Innenrand
- 48: Außenrand
- 50: Referenzkreis
- 51: erster Schenkel
- 52: zweiter Schenkel
- 53: Isolationskrone
- 54: Führung
- 55: Schlitz
- 56: Kontur
- 57: Anschlussstift
- 58: Kontaktträger
- 59: Erweiterung
- 60: Umlenkmittel
- 61: Hilfsanformung
- 62: Umlenkzapfen
- 63: Verbindungsmittel
- 64: Abdeckring
- 65: Anbauteil
- 66: erste Biegestelle
- 67: zweite Biegestelle
- 68: Innenkante
- 69: Außenkante
- 80: Führungsvorsprung
- 90: Auflageprofil
- 91: radialer Arm
- 92: axialer Arm
- 93: Startdrahtauflage
- 94: Enddrahtauflage
- 95: Startdraht
- 96: Enddraht
- 97: Freiraum
- 98: Startanschlagzapfen
- 99: Endanschlagzapfen
- 100: Filmscharnier
- 101: Abdecklappen
- 102: Ausleger

## Patentansprüche

1. Verfahren zur Herstellung eines Gleichstrommotors (1), mit einem permanentmagnetischen, um eine Motorlängsachse (19) drehbar gelagerten Innenrotor (2) und einem Stator (30), bestehend aus einem bewickelten Statorkern (3) mit mehreren ausgeprägten nach innen gerichteten Polen (4), welche in Umfangsrichtung mit einem Rückschlussring (5) einstückig und durch Statornuten (6) voneinander getrennt sind, einem Isolierstoffkörper (7), welcher die Statornuten (6) auskleidet und eine Rückschlussringabdeckung (8) aufweist, welche eine axiale Stirnseite des Rückschlussrings (5) abdeckt, wobei ein Wicklungsdraht (10) durchgängig ohne Unterbrechung nacheinander um alle Pole (4) zur Bildung jeweils einer Spule (39) gewickelt ist und die Spulen dabei in einer Dreieck-Parallel-Anordnung verschaltet, **gekennzeichnet durch** folgende Verfahrensschritte: a) Bereitstellung eines mit einem Isolierstoffkörper (7) versehenen Statorkerns (3), eines Motorgehäuses (15), eines Kontaktträgers (58), isolierten Sammelschienen (14), einer Isolationskrone (53) und eines Lagerschilds oder Anbauteils (65); b) Bereitstellung einer Fertigungseinrichtung; c) Einlegen des Statorkerns (3) in die Fertigungseinrichtung; d) Anschlagen eines Wicklungsdrahtes an einer werkzeug- oder werkstückfesten Anschlagstelle; e) Wickeln einer Spule um einen ersten Pol; f) gerades Herausführen des Wicklungsdrahtes aus einer Statornut mit einer radialen und eine axialen Komponente; g) Herumlegen des Wicklungsdrahtes (10) um Auflageprofile (90d), die auf werkstückfesten, entfernbaren Hilfsanformungen (61d) angeordnet sind; Zurückführen des Wicklungsdrahtes (10) in die Statornut (6) unter Bildung einer U-förmigen Drahtverbindung (18); h) Wiederholung der Verfahrensschritte e bis g, bis alle erforderlichen Spulen (39) hergestellt sind; i) Anschlagen des Wicklungsdrahts (10) an einer werkzeug- oder werkstückfesten Anschlagstelle; j) Trennen des Wicklungsdrahtes (10); k) Abscheren der Hilfsanformungen (61d).

2. Verfahren nach Anspruch 1, **gekennzeichnet durch** folgenden Verfahrensschritt: l) Montage eines Kontaktträgers (58) auf den Isolierstoffkörper (7).

3. Verfahren nach Anspruch 1 oder 2, **gekennzeichnet durch** folgende Verfahrensschritte m) Biegen der U-förmigen Drahtverbindung (18) in Richtung Motorlängsachse (19) unter Beibehaltung der U-Form, so dass die Schenkel (51, 52) der Drahtverbindung (18) zumindest annähernd parallel oder geringfügig geneigt zur Motorlängsachse (19) verlaufen.

4. Verfahren nach Anspruch 3, **gekennzeichnet durch** folgenden Verfahrensschritt: n) Montage von einzelnen Sammelschienen (14) und einzelnen Isolierelementen oder einer Baugruppe aus Sammelschienen (14) und Isolierelementen auf den Kontaktträger (58), wobei Kontakthaken (17) der Sammelschienen (14) auf Kontaktabschnitte (20) der Drahtverbindung (18) aufgelegt werden.

5. Verfahren nach Anspruch 4, **gekennzeichnet durch** folgenden Verfahrensschritt: o) Verbinden der Kontakthaken (17) mit den Kontaktabschnitten (20) der Drahtverbindung (18) mittels eines Hot-Staking-Verfahrens oder Widerstandsschweißverfahrens.

6. Verfahren nach Anspruch 5, **gekennzeichnet durch** folgende Verfahrensschritte: p) Montage eines Permanentmagnetrotors in ein Motorgehäuse (15); Einpressen des Stators (30) in das Motorgehäuse (15).

7. Verfahren nach Anspruch 6, **gekennzeichnet durch** folgende Verfahrensschritte: p) Einpressen des Stators (30) in das Motorgehäuse (15).

8. Verfahren nach Anspruch 6 oder 7, **gekennzeichnet durch** folgenden Verfahrensschritt: q) Abknicken von Abdecklappen (101) bei der Montage des Stators (30) in das Motorgehäuse (15) aus einer radialen Ursprungsposition in eine axiale Endposition und Anordnen der abgeknickten Abdecklappen (101) zwischen der Kontakteinheit (16) und dem Motorgehäuse (15).

9. Verfahren nach Anspruch 6, 7 oder 8, **gekennzeichnet durch** folgenden Verfahrensschritt: r) Aufsetzen einer Isolationskrone (53) auf die Kontakteinheit (16) und/oder den Isolierstoffkörper (7).

10. Verfahren nach Anspruch 9 **gekennzeichnet durch** folgende Verfahrensschritte: s) Montage eines Permanentmagnetrotors und eines Lagerschilds oder eines Anbauteils an das Motorgehäuse (15); t) Endprüfung des Gleichstrommotors; u) Entnahme des Gleichstrommotors aus der Fertigungseinrichtung.

11. Verfahren nach Anspruch 9, **gekennzeichnet durch** folgenden Verfahrensschritte: s) Montage eines Lagerschilds oder eines Anbauteils (65) an das Motorgehäuse (15); t) Endprüfung des Gleichstrommotors; u) Entnahme des Gleichstrommotors aus der Fertigungseinrichtung.

## Claims

1. Method for producing a DC motor (1) comprising a permanent-magnet internal rotor (2) rotatably mounted about a motor longitudinal axis (19), a stator (30) consisting of a wound stator core (3) having a plurality of distinct, inwardly pointing poles (4) which in the circumferential direction are formed in one piece with a return yoke (5) and separated from one another by stator grooves (6), and an insulation member (7), which lines the stator grooves (6) and has a return yoke cover (8) which covers an axial end face of the return yoke (5), wherein a winding wire (10) is wound around all the poles (4) continuously without any breaks one after the other in order to form respective coils (39) and interconnects the coils in a delta-parallel arrangement in the process, **characterised by** the following method steps: a) providing a stator core (3) equipped with an insulation member (7), as well as a motor housing (15), a contact carrier (58), insulated busbars (14), an insulating crown (53) and an end shield or add-on part (65); b) providing a manufacturing device; c) placing the stator core (3) in the manufacturing device; d) attaching a winding wire to an attachment site fixed to the die or to the workpiece; e) winding a coil around a first pole; f) guiding the winding wire in a straight line out of a stator groove having a radial and an axial component; g) placing the winding wire (10) around bearing profiles (90d) arranged on removable auxiliary mouldings (61d) fixed to the workpiece; guiding the winding wire (10) back into the stator groove (6) while forming a U-shaped wire connection (18); h) repeating method steps e) to g) until all the required coils (39) are produced; i) attaching the winding wire (10) to an attachment site fixed to the die or to the workpiece; j) cutting the winding wire (10); k) shearing off the auxiliary mouldings (61d).

2. Method according to claim 1, **characterised by** the following method step: l) assembling a contact carrier (58) on the insulation member (7).

3. Method according to claim 1 or claim 2, **characterised by** the following method steps: m) bending the U-shaped wire connection (18) in the direction of the motor longitudinal axis (19) while retaining the U shape such that the legs (51, 52) of the wire connection (18) extend at least approximately in parallel with the motor longitudinal axis (19) or at a slight angle thereto.

4. Method according to claim 3, **characterised by** the following method step: n) assembling individual busbars (14) and individual insulation elements or an assembly of busbars (14) and insulation elements on the contact carrier (58), contact hooks (17) of the busbars (14) being placed on contact portions (20) of the wire connection (18).

5. Method according to claim 4, **characterised by** the following method step: o) connecting the contact hooks (17) to the contact portions (20) of the wire connection (18) using a heat-staking method or a resistance welding method.

6. Method according to claim 5, **characterised by** the following method steps: p) assembling a permanent-magnet rotor in a motor housing (15); pressing the stator (30) into the motor housing (15).

7. Method according to claim 6, **characterised by** the following method steps: p) pressing the stator (30) into the motor housing (15).

8. Method according to claim 6 or claim 7, **characterised by** the following method step: q) when the stator (30) is being assembled in the motor housing (15), bending covering lugs (101) out of a radial original position into an axial end position, and arranging the bent covering lugs (101) between the contact unit (16) and the motor housing (15).

9. Method according to claim 6, claim 7 or claim 8, **characterised by** the following method step: r) mounting an insulating crown (53) on the contact unit (16) and/or on the insulation member (7).

10. Method according to claim 9, **characterised by** the following method steps: s) assembling a permanent-magnet rotor and an end shield or an add-on part on the motor housing (15); t) performing a final inspection on the DC motor; u) removing the DC motor from the manufacturing device.

11. Method according to claim 9, **characterised by** the following method steps: s) assembling an end shield or an add-on part (65) on the motor housing (15); t) performing a final inspection on the DC motor; u) removing the DC motor from the manufacturing device.

## Revendications

1. Procédé de production d'un moteur à courant continu (1), avec un rotor interne à aimant permanent (2) monté rotatif autour d'un axe longitudinal de moteur (19) et un stator (30), consistant en un noyau de stator bobiné (3) avec plusieurs pôles saillants dirigés vers l'intérieur (4), qui sont d'une seule pièce avec un anneau de culasse (5) et séparés les uns des autres par des encoches de stator (6) dans la direction de la circonférence, un corps isolant (7) qui tapisse les encoches de stator (6) et un élément de recouvrement d'anneau de culasse (8) qui recouvre un côté frontal axial de l'anneau de culasse (5), où un fil de bobinage (10) est enroulé en continu sans interruption autour de tous les pôles (4) successivement pour former à chaque fois une bobine (39) et les bobines sont ainsi connectées dans un agencement en triangle parallèle, **caractérisé par** les étapes de procédé suivantes: a) fourniture d'un noyau de stator (3) pourvu d'un corps isolant (7), d'un carter de moteur (15), d'un porte-contacts (58), de barres omnibus isolées (14), d'une couronne isolante (53) et d'un flasque ou pièce rapportée (65); b) fourniture d'une installation de fabrication; c) insertion du noyau de stator (3) dans l'installation de fabrication; d) mise en place d'un fil de bobinage au niveau d'un point de mise en place solidaire d'outil ou de pièce à usiner; e) enroulement d'une bobine autour d'un premier pôle; f) tirage rectiligne du fil de bobinage depuis une encoche de stator avec une composante radiale et une composante axiale; g) disposition du fil de bobinage (10) autour de profilés d'appui (90d) qui sont disposés sur des bossages auxiliaires amovibles (61d) solidaires de pièce à usiner; retour du fil de bobinage (10) dans l'encoche de stator (6) pour former une liaison de fil en forme de U (18); h) répétition des étapes de procédé e à g jusqu'à ce que toutes les bobines (39) requises aient été produites; i) mise en place du fil de bobinage (10) au niveau d'un point de mise en place solidaire d'outil ou de pièce à usiner; j) séparation du fil de bobinage (10); k) cisaillage des bossages auxiliaires (61d).

2. Procédé selon la revendication 1, **caractérisé par** l'étape de procédé suivante: 1) montage d'un porte-contacts (58) sur le corps isolant (7).

3. Procédé selon la revendication 1 ou 2, **caractérisé par** les étapes de procédé suivantes m) cintrage de la liaison de fil en forme de U (18) dans la direction de l'axe longitudinal de moteur (19) tout en maintenant la forme en U, de sorte que les branches (51, 52) de la liaison de fil (18) s'étendent de manière au moins approximativement parallèle ou légèrement inclinée par rapport à l'axe longitudinal de moteur (19).

4. Procédé selon la revendication 3, **caractérisé par** l'étape de procédé suivante: n) montage de barres omnibus individuelles (14) et d'éléments isolants individuels ou d'un assemblage de barres omnibus (14) et d'éléments isolants sur le porte-contacts (58), où des crochets de contact (17) des barres omnibus (14) sont appliqués sur des sections de contact (20) de la liaison de fil (18).

5. Procédé selon la revendication 4, **caractérisé par** l'étape de procédé suivante: o) liaison des crochets de contact (17) aux sections de contact (20) de la liaison de fil (18) au moyen d'un procédé d'agrafage à chaud ou d'un procédé de soudage par résistance.

6. Procédé selon la revendication 5, **caractérisé par** les étapes de procédé suivantes: p) montage d'un rotor à aimant permanent dans un carter de moteur (15); enfoncement du stator (30) dans le carter de moteur (15).

7. Procédé selon la revendication 6, **caractérisé par** les étapes de procédé suivantes: p) enfoncement du stator (30) dans le carter de moteur (15).

8. Procédé selon la revendication 6 ou 7, **caractérisé par** l'étape de procédé suivante: q) pliage de pattes de recouvrement (101) lors du montage du stator (30) dans le carter de moteur (15) d'une position initiale radiale à une position finale axiale et disposition des pattes de recouvrement pliées (101) entre l'unité de contact (16) et le carter de moteur (15).

9. Procédé selon la revendication 6, 7 ou 8, **caractérisé par** l'étape de procédé suivante: r) mise en place d'une couronne isolante (53) sur l'unité de contact (16) et/ou le corps isolant (7).

10. Procédé selon la revendication 9, **caractérisé par** les étapes de procédé suivantes: s) montage d'un rotor à aimant permanent et d'un flasque ou d'une pièce rapportée sur le carter de moteur (15), t) test final du moteur à courant continu; u) retrait du moteur à courant continu de l'installation de fabrication.

11. Procédé selon la revendication 9, **caractérisé par** les étapes de procédé suivantes: s) montage d'un flasque ou d'une pièce rapportée (65) sur le carter de moteur (15); t) test final du moteur à courant continu; u) retrait du moteur à courant continu de l'installation de fabrication.
